# EUROPÄISCHE PATENTSCHRIFT

(11) **EP 3 072 631 B1**
(45) Veröffentlichungstag und Bekanntmachung des Hinweises auf die Patenterteilung: **10.05.2017**
(21) Anmeldenummer: 15161271.0
(22) Anmeldetag: 27.03.2015
(51) Int. Cl.: B23Q 1/00, B23B 31/00, H01R 3/00

(54) **STECK-VORRICHTUNG**
PLUG DEVICE
DISPOSITIF DE RACCORDEMENT

(43) Veröffentlichungstag der Anmeldung: 28.09.2016
(73) Patentinhaber: SMW-AUTOBLOK Spannsysteme GmbH, 88074 Meckenbeuren (DE)
(72) Erfinder: Deininger, Harald, 88048 Friedrichshafen (DE)
(74) Vertreter: Engelhardt & Engelhardt

(56) Entgegenhaltungen:
- DE-U1- 20 009 486
- JP-A- S62 277 237

## Beschreibung

Die Erfindung bezieht sich auf eine Steck-Vorrichtung zur Übertragung von elektrischer Energie nach dem Oberbegriff des Patentanspruches 1.

Es ist hinlänglich bekannt, elektrische Energie von einer Stromquelle an einen elektrischen Verbraucher mittels einer Steck-Vorrichtung zu übertragen. Problematisch ist eine solche Energieübertragung, wenn die Kopplung der Steck-Vorrichtung automatisiert, beispielsweise an einer Werkzeugmaschine oder dgl., zu erfolgen hat, denn dann ist zu gewährleisten, dass die Kopplungsvorgänge maschinell erzeugbar und nach einem vorgegebenen Steuerablauf erfolgen.

Darüber hinaus werden solche Steck-Vorrichtungen nicht nur an einer Werkzeugmaschine im Bereich der Ladestation verwendet, sondern gemeinsam mit dem Körper gelangen zumindest Teile der Steck-Vorrichtung in einen Bearbeitungsbereich der Werkzeugmaschine, in dem Späne, Schmutzwasser und sonstige Verunreinigungen anfallen, durch die, die in dem Körper angeordneten Teile der Steck-Vorrichtung verunreinigt, zerstört oder beschädigt werden, so dass anschließend ein ordnungsgemäßer Kopplungsvorgang für die Steck-Vorrichtung nicht mehr gewährleistet ist.

Aus der JP S 62 277237 ist einen elektrische Steckvorrichtung bekannt geworden, die elektrische Energie von einer externen Stromquelle zu einem auf einer Welle angeordneten Verbraucher überträgt und den Transfer von Daten ermöglicht. Derartige Steck-Verbinder weisen aufgrund der Anfälligkeit für Verschmutzungen die vorgenannten Nachteile auf.

Es ist daher Aufgabe der Erfindung, eine Steck-Vorrichtung der eingangs genannten Gattung derart weiterzubilden, dass der Kopplungsvorgang zwischen den Steckern und der jeweiligen für diese vorgesehene Aufnahmeöffnung der Steckdose, die voneinander räumlich trennbar sind, automatisiert erfolgt. Ferner soll die Schnittstellen, insbesondere die Übergangsbereiche, die in dem Körper der Steck-Vorrichtung vorgesehenen Bauteile während des Bearbeitungsprozesses wasser- und/oder luftdicht verschlossen sind, um den Eintritt von Verunreinigungen bzw. um Beschädigungen zu vermeiden.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass die Steckdose in Richtung des Körpers mittels einer ersten Zustelleinrichtung bewegbar ist, dass in dem Körper eine Aufnahmetasche eingearbeitet oder vorgesehen ist, in die die erste Zustelleinrichtung mit der Steckdose einführbar ist, dass in dem Körper eine Kammer vorhanden ist, die in die Aufnahmetasche mündet, dass in der Kammer eine zweite Zustelleinrichtung beweglich gelagert ist, an deren einen freien der Aufnahmetasche zugewandten Stirnseite die Stecker angeordnet sind, und dass durch die Zustellbewegung der zweiten Zustelleinrichtung die Stecker in Wirkkontakt mit jeweils einer der Aufnahmeöffnungen der Steckdose zur elektrischen Energieübertragung und zur Erzeugung des Kopplungszustandes gelangen und durch die zweite Zustelleinrichtung die Stecker nach Beendigung der Energieübertragung und zur Entkoppelung aus der jeweiligen Aufnahmeöffnung der Steckdose herausgezogen sind, ist zuverlässig erreicht, dass die Koppelung der Stecker mit den jeweiligen Aufnahmeöffnungen der Steckdose automatisiert in einem vorgegebenen Zeitintervall erreicht ist.

Es ist besonders vorteilhaft, wenn die Zustellbewegung der ersten Zustelleinrichtung zeitlich vor der Zustellbewegung der zweiten Zustelleinrichtung erfolgt, denn dadurch ist gewährleistet, dass die Steckdose bereits in dem Körper positioniert ist, so dass nachfolgend die Stecker in den jeweiligen Aufnahmeöffnungen der Steckdose platzierbar sind.

Zu diesem Zweck soll die Kammer, in der die zweite Zustelleinrichtung axial verschiebbar angeordnet ist, senkrecht zu der Aufnahmetasche, in die die erste Zustelleinrichtung eintaucht, verlaufen.

Darüber hinaus kann in einer weiteren vorteilhaften Weiterbildung der Erfindung die zweite Zustelleinrichtung mittels einer dritten Zustelleinrichtung betätigt werden, die in dem Gehäuse, in der auch die erste Zustelleinrichtung angeordnet ist, betätigbar ist. Die zweite Zustelleinrichtung weist eine schiefe Ebene auf, die trieblich in Wirkkontakt mit einer an der dritten Zustelleinrichtung vorgesehenen schiefen Ebene zusammenwirkt. Wenn demnach die dritte Zustelleinrichtung in Richtung der zweiten Zustelleinrichtung bewegt ist, wird durch die Ausrichtung der schiefen Ebene erreicht, dass die zweite Zustelleinrichtung in Richtung der Aufnahmetasche und somit die Stecker in Richtung der Aufnahmeöffnungen der Steckdose verschoben sind.

Da durch den Körper ein Spannfutter zur Halterung von Werkstücken aufgenommen ist, der von der Be- und Entladestation in eine Bearbeitungszone einer Werkzeugmaschine überführt sind und im Bereich der Bearbeitungszone Verschmutzungen in Form von Spänen, Schmutzwasser und sonstigen Partikeln auftreten, ist es besonders vorteilhaft, wenn die Öffnung der Aufnahmetasche wasser- und/oder luftdicht verschlossen ist, solange der Körper im Bereich der Bearbeitungszone einer Werkzeugmaschine angeordnet ist. Zu diesem Zweck ist die Öffnung der Aufnahmetasche mittels eines Dichtungsdeckels verschlossen, der axial beweglich in der Aufnahmetasche gelagert ist. Durch das Eintauchen der ersten Zustelleinrichtung wird der Dichtungsdeckel in Richtung eines Bodens der Aufnahmetasche gedrückt, so dass die Steckdose im Bereich der Kammer positioniert ist. Der Dichtungsdeckel ist im Querschnitt U-förmig ausgestaltet und nimmt bereichsweise eine Schraubendruckfeder auf, die gegenüberliegend an dem Boden der Aufnahmetasche abgestützt ist.

Sobald die erste Zustelleinrichtung aus der Aufnahmetasche herausgezogen ist, drückt die Schraubendruckfeder den Dichtungsdeckel in die Ausgangsposition im Bereich der Öffnung der Aufnahmetasche, so dass der Dichtungsdeckel bündig mit der Außenseite des Körpers abschließt. Zudem wirkt der Dichtungsdeckel im eingedrückten Zustand als Anschlag, denn dieser ist aufgrund seiner U-förmigen Querschnittskontur als Abstandshalter anzusehen. Der Dichtungsdeckel liegt nämlich auf dem Boden der Aufnahmetasche auf und endet etwa im Bereich der Mündungsöffnung der Kammer in die Aufnahmetasche, so dass die erste Zustelleinrichtung an dem Dichtungsdeckel zur Anlage gelangt, sobald die Bewegung der ersten Zustelleinrichtung in die Aufnahmetasche gestoppt ist, sobald die Steckdose gegenüberliegend zu der Kammer positioniert ist.

Um mögliche Anhaftungen von Spänen, Partikeln und sonstigen Verunreinigungen im Bereich der Öffnung der Aufnahmetasche und/oder im Schnittstellenbereich zwischen der zweiten und dritten Zustelleinrichtung wegzublasen oder wegzuspülen, sind in dem Gehäuse, in denen die erste und dritte Zustelleinrichtung angeordnet sind, Gebläseöffnungen vorgesehen, die einen Luft- und/oder Flüssigkeitsstrom in Richtung der Schnittstellen zwischen der zweiten und dritten Zustelleinrichtung und der Öffnung der Aufnahmetasche ausrichten bzw. an diese Positionen überführen, so dass die dort anhaftenden Verunreinigungen entfernbar sind.

Durch Näherungsschalter, die an der ersten und dritten Zustelleinrichtung vorgesehen sind, kann zudem der Abstand zwischen der ersten und dritten Zustelleinrichtung zu den jeweiligen in dem Körper angeordneten Bauteilen überwacht und gesteuert werden. Diese Informationen und die zeitlich nachfolgende Ansteuerung der ersten und dritten Zustelleinrichtung sind mittels einer Steuereinheit bewerkstelligt.

In der Zeichnung sind zwei erfindungsgemäße Ausführungsbeispiele einer Steck-Vorrichtung dargestellt, die nachfolgend erläutert sind. Im Einzelnen zeigt:
- Figur 1: ein erstes Ausführungsbeispiel einer Steck-Vorrichtung zur Übertragung von elektrischer Energie von einer Stromquelle zu einem in einem Spannfutter angeordneten elektrischen Verbraucher, durch den die Spannbacken des Spannfutters zustell- und feststellbar sind in einer Be- und Entladestation sowie in einer Bearbeitungszone einer Werkzeugmaschine, jeweils im Schnitt,
- Figur 2: ein zweites Ausführungsbeispiel einer Steck-Vorrichtung zur Übertragung von elektrischer Energie von einer Stromquelle zu einem in einem Flansch angeordneten elektrischen Verbraucher, durch den eine Spannvorrichtung in Form eines Schraubstockes angetrieben ist, im Schnitt,
- Figur 3: die Einzelteile einer der Steck-Vorrichtungen gemäß Figuren 1 oder 2, im ausgebauten Zustand, insbesondere eine erste Zustelleinrichtung an deren freien Stirnseite eine Steckdose mit Aufnahmeöffnungen, eine zweite in einem Körper des Spannfutters oder des Flansches axial verschiebbar gelagerte Zustelleinrichtung mit mindestens zwei Steckern, die der Aufnahmeöffnung der Steckdose zugewandt sind, gelagert ist und mit einer dritten Zustelleinrichtung, durch die die zweite Zustelleinrichtung betätigbar ist,
- Figur 4a: die Steck-Vorrichtung gemäß Figur 3 im zusammengebauten Zustand und in der Ausgangsposition, im Schnitt,
- Figur 4b: die Steck-Vorrichtung gemäß Figur 4a im Berührungszustand zwischen einem die Steckdose aufnehmenden Gehäuse und dem Körper oder Flansch,
- Figur 4c: die Steck-Vorrichtung gemäß Figur 4b, bei der die erste Zustelleinrichtung mit der Steckdose in den Körper oder Flansch eingefahren ist,
- Figur 4d: die Steck-Vorrichtung gemäß Figur 4c, bei der sowohl die erste als auch die dritte Zustelleinrichtung in den Körper eingefahren ist und bei der die zweite Zustelleinrichtung in Richtung der Steckdose zur Erzeugung eines Kopplungszustandes zwischen den Steckern und den Aufnahmeöffnungen der Steckdose verschoben ist,
- Figur 5a: einen Schnitt durch die Steck-Vorrichtung gemäß Figur 4c entlang der Schnittlinie Va/Va und
- Figur 5b: die Steck-Vorrichtung im Schnitt gemäß Figur 4d entlang der Schnittlinie Vb/Vb.

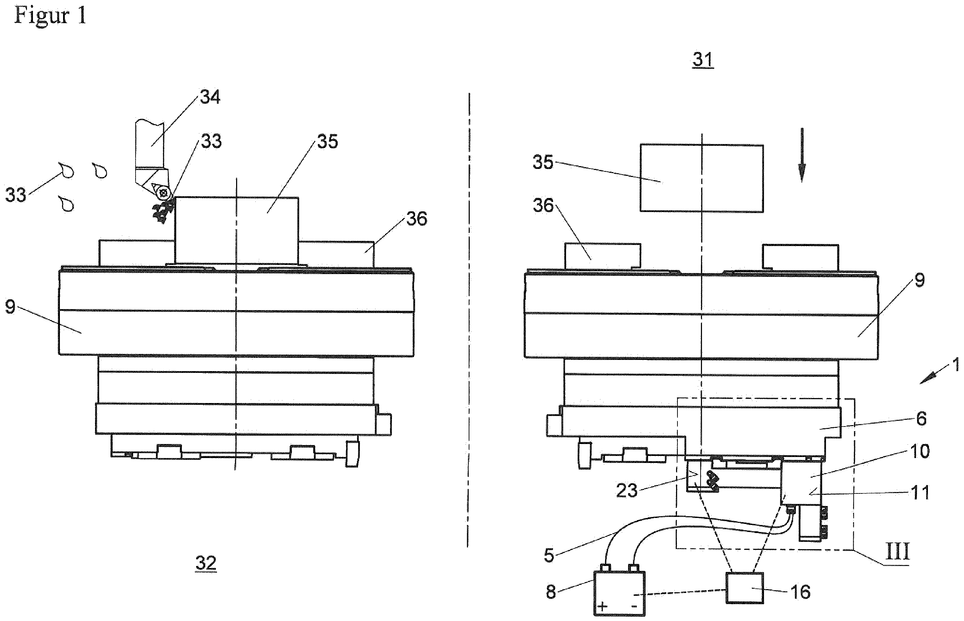

In Figur 1 ist eine Steck-Vorrichtung 1 zu entnehmen, durch die ein elektrischer Verbraucher, beispielsweise ein Antriebsmotor 7, elektrisch mit einer Stromquelle 8 verbunden werden soll. Der Antriebsmotor 7 ist dabei räumlich getrennt von der Stromquelle 8 in einem Körper 6, beispielsweise einem Futterkörper 6 eines Spannfutters 9 angeordnet.

Durch den Antriebsmotor 7 sollen die dem Spannfutter 9 zugeordneten und in diesem beweglich gelagerten Spannbacken 36 sowohl zustellbar als auch in ihrer Arretierungsposition festlegbar sein, um ein Werkstück 35 einzuspannen. Die Be- und Entladezone einer Werkzeugmaschine ist mit der Bezugsziffer 31 gekennzeichnet.

Durch eine schematisch dargestellte Werkzeugmaschine in Form eines Werkzeuges 34 soll das eingespannte Werkstück 35 in einer Bearbeitungszone 32 spanabhebend bearbeitet werden. Solche Bearbeitungsvorgänge können beispielsweise durch Drehen, Fräsen, Bohren oder dergleichen durchgeführt sein.

Zur Stromversorgung des Antriebsmotors 7 ist dieser während der Be- und Entladezeit mit ausreichender elektrischer Energie über die Steck-Vorrichtung 1 zu versorgen. Sobald das Werkstück 35 in dem Spannfutter 9 arretiert ist, soll dieses in die Bearbeitungszone 32 überführt oder verschwenkt werden. Um die Bewegung des Spannfutters 9 aus der Be- und Entladezone 31 zu ermöglichen ist somit die Steck-Vorrichtung 1 derart auszugestalten, dass die dem Körper 6 des Spannfutters 9 zugeordneten elektrischen Bauteile räumlich trennbar von der der Stromquelle 8 verbundenen elektrischen Bauteile der Steck-Vorrichtung 1 sind.

Darüberhinaus entstehen durch die Bearbeitungsvorgänge an dem Werkstück 35 Verschmutzungen, beispielsweise in Form von Spänen 36, Schmutzwasser, Hydraulikflüssigkeit und dergleichen. Während des Bearbeitungsvorganges soll demnach der Körper 6 und die darin eingebauten elektrischen Bauteile wasser- und luftdicht gekapselt sein, so dass die Verschmutzungen 36 nicht an die elektrischen Bauteile der Steck-Vorrichtung 1 gelangen.

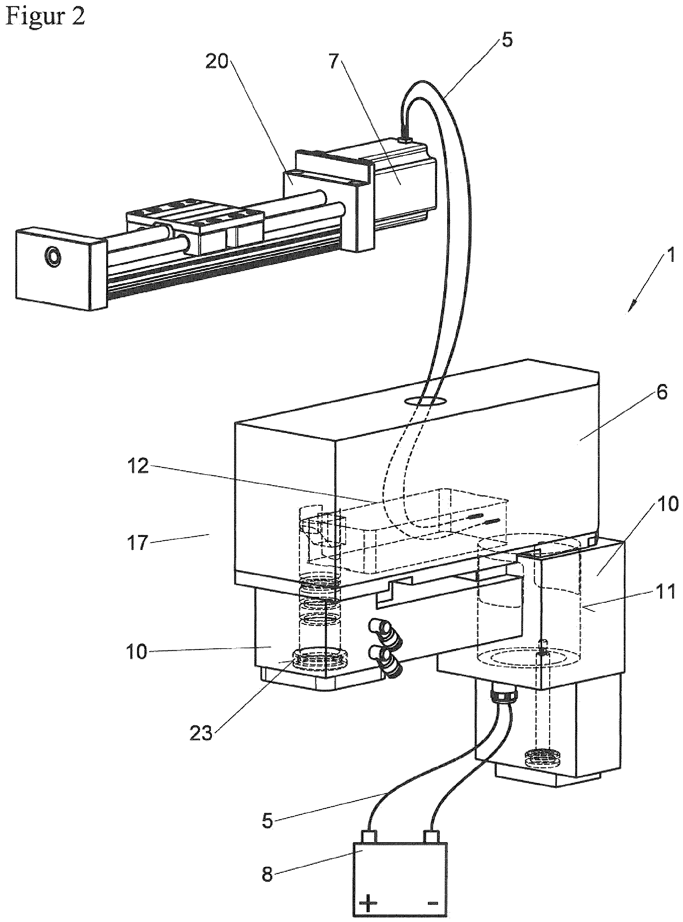

Aus Figur 2 ist ersichtliche, dass die Steck-Vorrichtung 1 auch in einem Flansch 17 verwendbar ist. Über elektrische Leitungen 5 ist die Steck-Vorrichtung 1 des Flansches 17 mit dem elektrischen Antrieb 7 verbunden, durch den beispielsweise ein Schraubstock 20 oder eine sonstige Spannvorrichtung betätigbar ist.

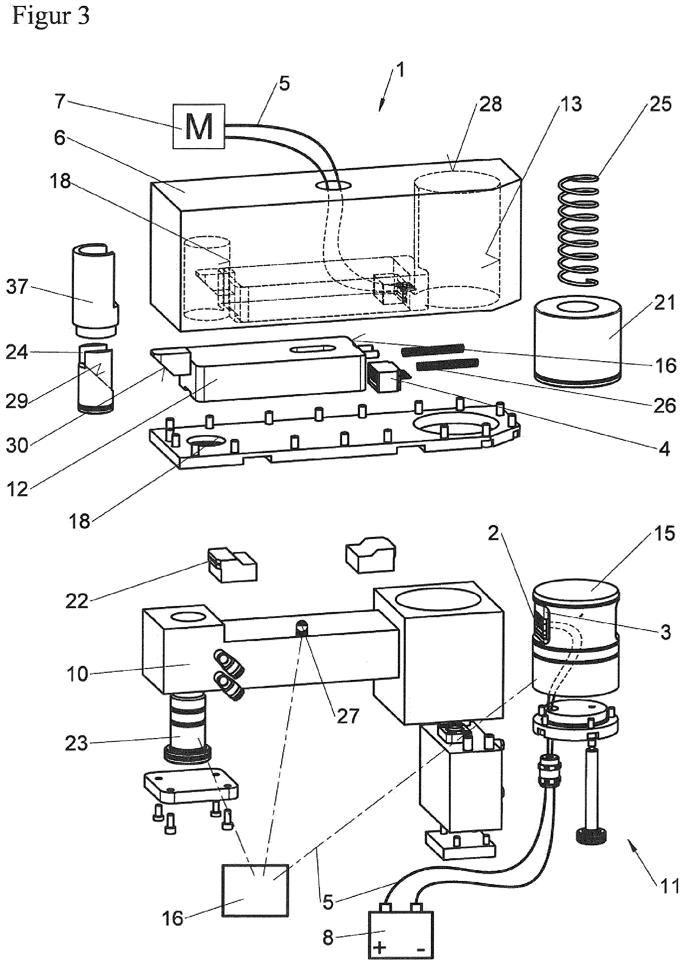

Beiden Ausführungsvarianten der Figuren 1 und 2 ist der konstruktive, nachfolgend näher erläuterte Aufbau gemeinsam, der im Einzelnen in Figur 3 in Form einer Exposionsdarstellung zu entnehmen ist. Die Steck-Vorrichtung 1 besteht dabei aus einer Steckdose 2, die mindestens zwei Aufnahmeöffnungen 3 aufweist, die als Steckplätze und zur elektrischen Kopplung dienen. Dabei sind die jeweiligen Aufnahmeöffnungen 3 mittels elektrischer Leitungen 5 mit der Stromquelle 8 elektrisch verbunden.

Die Steckdose 2 ist an einer ersten Zustelleinrichtung 11, die als pneumatisch betriebener Kolben ausgestaltet ist, angebracht. Die Steckdose 2 ist an einer freien Stirnseite des Kolbens 11 vorgesehen, der in Richtung des Körpers 6 oder des Flansches 17 gemäß Figur 1 oder 2 zustellbar ist. Um die erste Zustelleinrichtung 11 zu lagern, ist diese in einem Gehäuse 10 angeordnet, das ortsfest und räumlich getrennt zu dem Körper 6 befestigt ist.

In dem Körper 6 ist eine Kammer 14 eingearbeitet oder vorgesehen, in der eine zweite Zustelleinrichtung 12 in Form eines Stiftes oder Stange axial verschiebbar gelagert ist. Die Kammer 14 mündet in eine in dem Körper 6 eingearbeitete Aufnahmetasche 13. Die Längsachse der Aufnahmetasche 13 und die Längsachse der Kammer 14 verlaufen senkrecht zueinander.

An der freien der Aufnahmetasche 13 zugewandten Stirnseite der zweiten Zustelleinrichtung 12 sind mindestens zwei Stecker 4 angebracht, die demnach in Richtung der Aufnahmetasche 13 abstehen.

Darüberhinaus ist in dem Gehäuse 10 räumlich beabstandet zu der ersten Zustelleinrichtung 11 eine dritte Zustelleinrichtung 23 axial verschiebbar gelagert, die pneumatisch betrieben ist. Die dritte Zustelleinrichtung 23 ist als Kolben ausgestaltet, der in Richtung des Körpers 6 verfahrbar ist.

Die triebliche Wirkverbindung zwischen der dritten und zweiten Zustelleinrichtung 23 und 12 kann prinzipiell auf zwei Arten erreicht werden. Zunächst kann das freie Ende der dritten Zustelleinrichtung 23 unmittelbar auf das freie Ende der zweiten Zustelleinrichtung 12, die in Richtung einer in den Körper 6 eingearbeiteten Durchgangsöffnung 18 weist, einwirken. Die als Schnittstelle bezeichnete Kontaktfläche zwischen den beiden Zustelleinrichtungen 12 und 23 sind als parallel verlaufende schiefe Ebene 29 und 30 ausgestaltet und liegen aneinander an, so dass beim Zustellen der dritten Zustelleinrichtung 23 die zweite Zustelleinrichtung 12 in Richtung der Aufnahmetasch3 12 axial verschoben ist.

Um die Durchgangsöffnung 18 luft- und/oder wasserdicht zu verschließen ist eine Dichtungshülse 37 in diese axialverschiebbar eingesetzt. Die Dichtungshülse 37 wirkt darüberhinaus als Übertragungselement der Zustellbewegung der dritten Zustelleinrichtung 23 auf die zweite Zustelleinrichtung 12 und zwar derart, dass zwischen der Dichtungshülse 37 und dem freien Ende der zweiten Zustelleinrichtung 12 ein Zwischenglied 24 angebracht ist. Sowohl die Dichtungshülse 37 als auch das Zwischenglied 24 weisen die jeweilige schiefe Ebene 29 und 30 auf, die in vorstehend erläuternder Weise aneinander entlang gleiten, sobald die Dichtungshülse 37 von der dritten Zustelleinrichtung 23 in den Körper 6 eingeschoben ist. Durch die Verstellbewegung der Dichtungshülse 37 wird nämlich das Zwischenglied 24 und damit die zweite Zustelleinrichtung 12 in Richtung der Aufnahmetasche 13 bewegt.

Beim Einfahren der dritten Zustelleinrichtung 23 in den Körper 6 und in die Kammer 14 gelangen nämlich die beiden schiefen Ebenen 29 und 30 entweder der dritten Zustelleinrichtung 23 und der zweiten Zustelleinrichtung 12 oder die Dichtungshülse 37 und das Zwischenglied 24 in Wirkkontakt und gleiten in einer Relativbewegung aneinander entlang. Die Neigung der beiden schiefen Ebenen 29 und 30 verläuft dabei parallel und geneigt zu der Längsachse der zweiten Zustelleinrichtung 12, derart, dass durch die Bewegung der dritten Zustelleinrichtung 23 die zweite Zustelleinrichtung 12 in Richtung der Aufnahmetasche 13 verfahren bzw. geschoben ist.

Um den Körper 6, insbesondere während des Bearbeitungsvorganges in der Bearbeitungszone 32 luft- und wasserdicht zu verschließen bzw. abzudichten, ist der Aufnahmetasche 13 ein Dichtungsdeckel Dichtungshülse 37 das Zwischenglied 24 zugeordnet, die mittels einer Schraubendruckfeder 25 abgestützt sind.

Die Schraubendruckfeder 25 des Dichtungsdeckels 21 liegt auf einem Boden 28 der Aufnahmetasche 13 und an der Innenseite des Dichtungsdeckels 21 auf oder an. Der Dichtungsdecke 21 ist in seinem Querschnitt U-förmig ausgestaltet, so dass die Schraubendruckfeder 25 bereichsweise von dem Dichtungsdeckel 21 umgriffen ist. Zudem bilden die Außenseiten des Dichtungsdeckels 21 eine zylinderförmige Außenmantelfläche, die an der Innenwand der Aufnahmetasche 13, die mit der Außenkontur des Dichtungsdeckels 21 korrespondiert, eine Führung bildet. Somit kann der Dichtungsdeckel 21 geführt entlang der Innenwand der Aufnahmetasche 13 beim Eintauchen der ersten Zustelleinrichtung 11 in die Aufnahmetasche 13 verschoben werden.

Um die Wirkverbindung zwischen der dritten und der zweiten Zustelleinrichtung 23 bzw. 12 herzustellen, ist im Bereich der dritten Zustelleinrichtung 23 in dem Körper 6 die Durchgangsöffnung 18 eingearbeitet, so dass die freie Stirnseite der dritten Zustelleinrichtung 23 unmittelbar mit deren schiefen Ebene 30 zur trieblichen Verbindung mit der schieben Ebene 29 der zweiten Zustelleinrichtung 12 gelangt oder die Dichtungshülse 37 in den Körper 6 durch die dritte Zustelleinrichtung 23 gedrückt ist, wodurch die zweite Zustelleinheit 12 bewegbar ist. Da die zweite Zustelleinrichtung 12 im Ausgangszustand die Durchgangsöffnung 18 verschließt, gelangen durch diese keine Verschmutzungspartikel 36 in den Körper 6. Diese können sich allenfalls an der schiefen Ebene 29 absetzen und mittels Druckluft oder einem Flüssigkeitsstrom abgespült werden, bevor die dritte Zustelleinrichtung 23 in einen erneuten Wirkkontakt mit der zweiten Zustelleinrichtung 12 gebracht ist. Die erste und die dritte Zustelleinrichtung 11 bzw. 23 verlaufen parallel und räumlich zueinander beabstandet in dem Gehäuse 10 und werden mittels einer Steuereinheit 16 betrieben.

Ferner sind an der ersten und dritten Zustelleinrichtung 11 oder 23 jeweils ein Näherungsschalter 27 angebracht, um den Abstand zwischen diesen und den Körpern 6 zu ermitteln. Der Näherungsschalter 27 ist mit der Steuereinheit 16 verbunden und erzeugt elektrische Schaltsignale, durch die gegebenenfalls die Zustellbewegungen der Zustelleinrichtungen 11 und 23 gestoppt sind, wenn die Körper 6 nicht ordnungsgemäß zu dem Gehäuse 10 ausgerichtet ist.

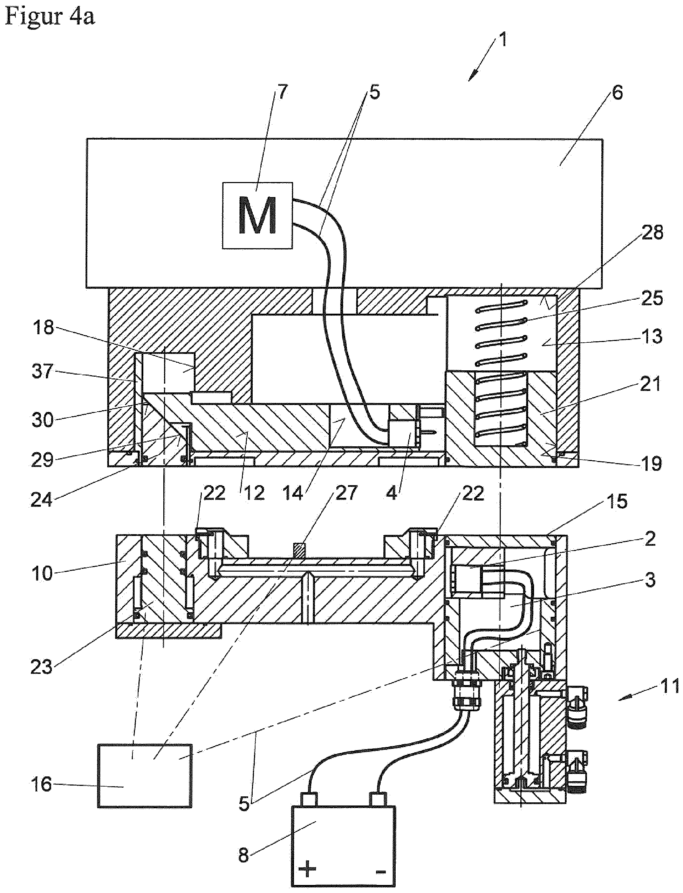

Aus Figur 4a ist der Ausgangszustand der Steck-Vorrichtung 1 ersichtlich. Der Körper 6 ist räumlich getrennt von dem Gehäuse 10. Die drei Zustelleinrichtungen 11, 12 und 23 sind unbetätigt, so dass die erste und dritte Zustelleinrichtung 11 bzw. 23 vollständig in dem Gehäuse 10 eingefahren sind und die zweite Zustelleinrichtung 12 die Durchgangsöffnung 18 verschließt und die an dieser angebrachten Stecker 4 von der Aufnahmetasche 13 beabstandet sind. Zudem ist der Dichtungsdeckel 21 bündig in der Öffnung 19 der Aufnahmetasche 13 angeordnet, so dass die Aufnahmetasche 13 luft- oder wasserdicht durch diesen verschlossen ist. Mittels der Schraubendruckfeder 25 ist der Dichtungsdeckel 21 axial beweglich positioniert.

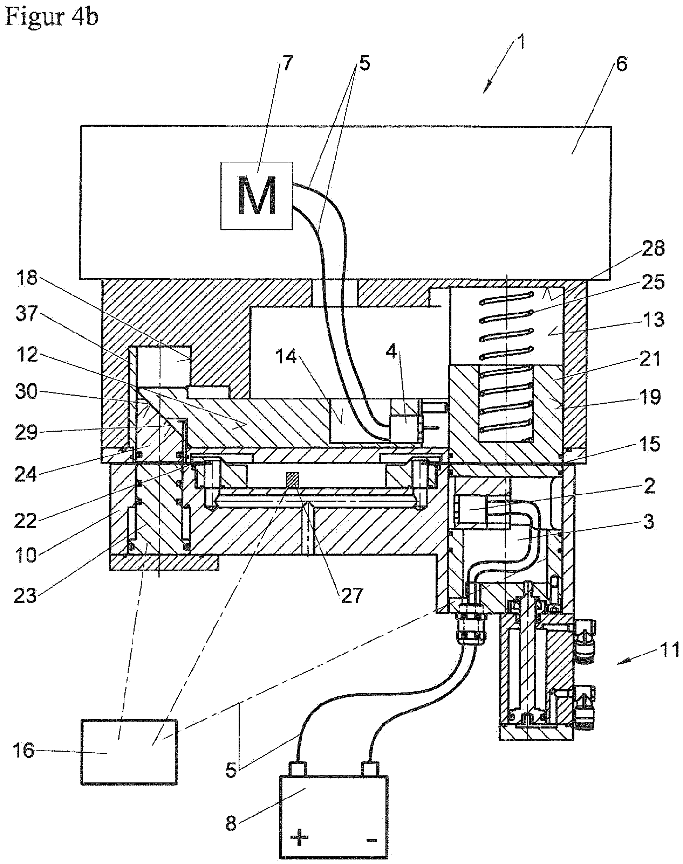

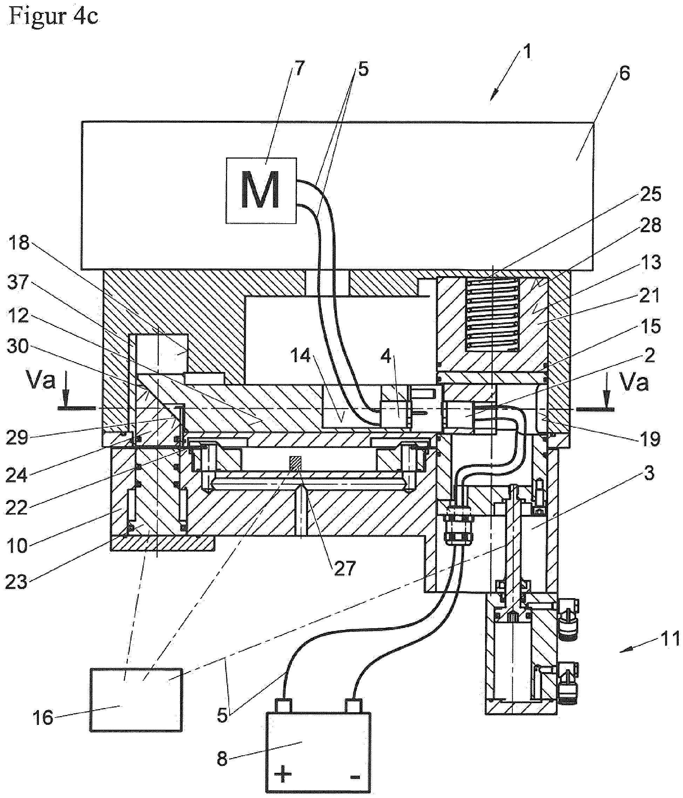

Durch Figur 4b ist der Berührungszustand zwischen dem Körper 6 und dem Gehäuse 10 der Steck-Vorrichtung 1 gezeigt. Der Körper 6 ist demnach auf dem ortsfesten Gehäuse 10 aufgesetzt und die Aufnahmetasche 13 verläuft fluchtend zu der ersten Zustelleinrichtung 11 und die Durchgangsöffnung 18 im Bereich der Kammer 14 des Körpers 6 ist fluchtend zu der dritten Zustelleinrichtung 23 positioniert. Folglich kann die erste Zustelleinrichtung 11 in Richtung der Aufnahmetasche 13 und die dritte Zustelleinrichtung 23 in Richtung der Durchgangsöffnung 18 der Kammer 14 verfahren oder zugestellt werden, ohne dass dabei deren Bewegungsabläufe behindert sind, denn der Dichtungsdeckei 21 wird mittels der ersten Zustelleinrichtung 11 in Richtung des Bodens 28 der Aufnahmetasche 13 verschoben und die ersten Zustelleinrichtung 11 taucht zusammen mit der an dieser angebrachten Steckdose 2 gemäß Figur 4c in die Aufnahmetasche 13 ein. Die Aufnahmeöffnungen 3 der Steckdose 2 sind fluchtend zu der Kammer 14 zur Aufnahme der Stecker 4 platzierbar.

Da der Dichtungsdeckel 21 im Querschnitt als U-Profil ausgestaltet ist, gelangt dessen umlaufender Schenkel in Wirkkontakt mit dem Boden 28 der Aufnahmetasche 13 und bildet demnach einen Abstandhalter oder Anschlag für die erste Zustelleinrichtung 11, so dass die Bewegung der ersten Zustelleinrichtung 11 durch den Dichtungsdeckel 21 begrenzt ist. Die Länge des Dichtungsdeckel 21 ist dabei derart bemessen, dass die erste Zustelleinrichtung 11 zwar in die Aufnahmetasche 13 eintauchen bzw. einfahren kann, die Steckdose 2 jedoch lediglich bis in den Übergangsbereich zwischen der Kammer 14 und der Aufnahmetasche 13 bewegbar ist. Daher ist die Steckdose 2 fluchtend zu der Kammer 14 zur Erzeugung eines Kopplungszustandes für die elektrische Verbindung zwischen der Steckdose 2 und den Steckern 4 positioniert.

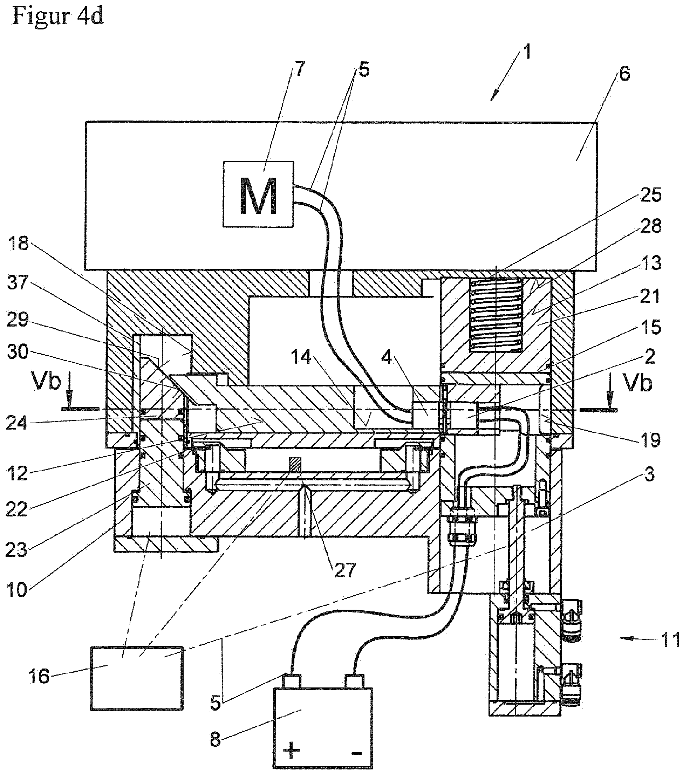

In Figur 4d ist die Betätigung der zweiten Zustelleinrichtung 12 durch die dritte Zustelleinrichtung 23 abgebildet. Sobald nämlich die erste Zustelleinrichtung 11 lageorientiert in dem Körper 6 positioniert ist und demnach die Aufnahmeöffnungen 3 der Steckdose 2 in Richtung der Stecker 4 weisen, wird die dritte Zustelleinrichtung 23 betätigt, so dass diese in Richtung der Durchgangsöffnung 18 der Kammer 14 verfahren ist. Somit treten die schiefen Ebenen 29 und 30 der dritten und zweiten Zustelleinrichtung 23 bzw. 12 in Wirkkontakt, wodurch die zweite Zustelleinrichtung 12 in Richtung der Aufnahmeöffnungen 3 der Steckdose 2 verfahren sind, so dass die an dieser angebrachten Stecker 4 in die Aufnahmeöffnungen 3 eintauchen und folglich eine elektrische Verbindung zwischen der Steckdose 2 und den Steckern 4 hergestellt ist. In diesem als Kopplungszustand bzw. als Zustand für die elektrische Energieübertragung bezeichneten Position kann der elektrische Antrieb 7 mit ausreichender Energie oder elektrischer Spannung versorgt werden, die ausreichend ist, für die benötigte Zustellung und Arretierung eines Spannfutters 9 bzw. eines Druckzylinders eines Schraubstockes 20 sonstigen Spannvorrichtung oder dergleichen.

Sobald das Werkstück 35 von dem Körper 6 oder dem Flansch 17 gelöst und ein unbearbeitetes Werkstück 35 erneut an diesen positioniert ist, kann der Kopplungszustand zwischen den Steckern 4 und den Aufnahmeöffnungen 3 der Steckdose 2 getrennt werden. Dies erfolgt in umgekehrter Reihenfolge. Zunächst wird demnach die dritte Zustelleinrichtung 23 in das Gehäuse 10 eingefahren. Durch eine weitere Schraubendruckfeder 26, die der zweiten Zustelleinrichtung 12 zugeordnet ist und mit dieser zusammenwirkt, wird diese und somit auch die Stecker 4 von der Steckdose 2 entfernt. Anschließend kann die erste Zustelleinrichtung 11 zurück in das Gehäuse 10 gezogen sein. Durch die Schraubendruckfeder 25 bewegt sich nachfolgend der Dichtungsdeckel 21 in Richtung der Öffnung 19 der Aufnahmetasche 13, so dass diese bevor der Körper 6 in die Bearbeitungszone 32 überführt ist, verschlossen ist.

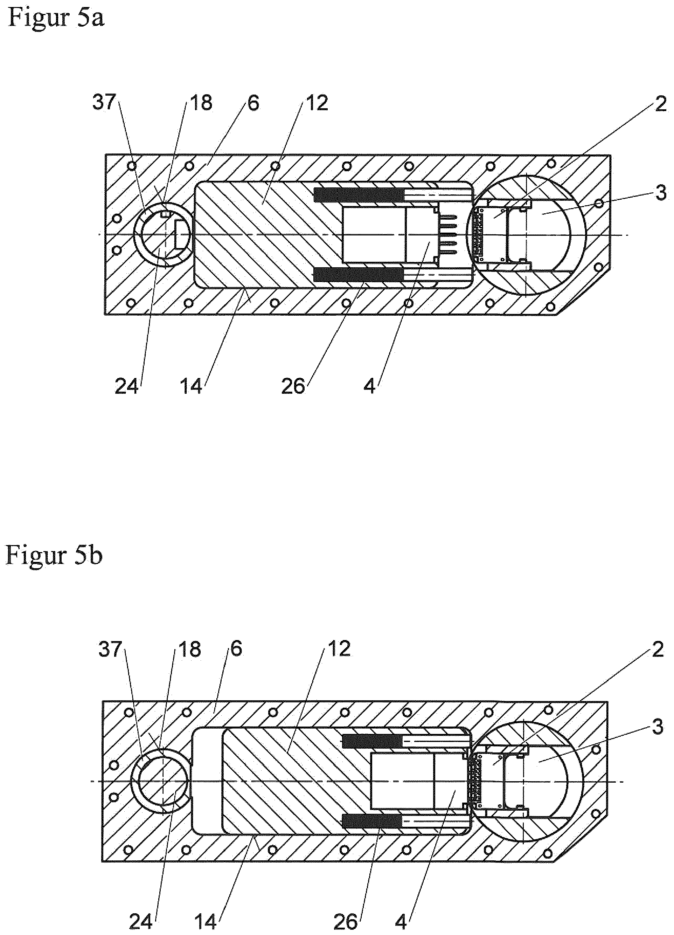

Aus den Figuren 5a und 5b ist im Detail zu entnehmen, wie die zweite Zustelleinrichtung 12 in der Kammer 14 gelagert ist und in welcher Weise die schiefe Ebene 29 der zweiten Zustelleinrichtung 12 geneigt ist, um diese axial in Richtung der Aufnahmeöffnung 13 verfahren zu können.

## Patentansprüche

1. Elektrische Steck-Vorrichtung (1) zur Übertragung von elektrischer Energie von einer externen Stromquelle (8) zu einem in einem Körper (6), vorzugsweise in einem Futterkörper (6) eines Spannfutters (9), angeordneten elektrischen Verbraucher (7), insbesondere einem elektrischen Antriebsmotor (7) zur Betätigung der Spannbacken des Spannfutters (9),
bestehend aus:
- einer mindestens zwei Aufnahmeöffnungen (3) aufweisende Steckdose (2), einem Körper (6) und einem in diesem angeordneten elektrischen Verbraucher (7), die jeweils über eine elektrische Leitung (5) mit der Stromquelle (8) verbunden sind und
- aus mindestens zwei durch jeweils eine elektrische Leitung (5) mit dem Verbraucher (7) verbundene Stecker (4), die in dem Körper (6) angeordnet sind und die mit den jeweiligen Aufnahmeöffnungen (3) der Steckdose (2) während der elektrischen Energieübertragung gekoppelt sind und die nach der Energieübertragung von den Aufnahmeöffnungen (3) entfernbar sind,
**dadurch gekennzeichnet,**
**dass** die Steckdose (2) in Richtung des Körpers (6) mittels einer ersten Zustelleinrichtung (11) bewegbar ist, dass in dem Körper (6) eine Aufnahmetasche (13) eingearbeitet oder vorgesehen ist, in die die erste Zustelleinrichtung (11) mit der Steckdose (2) einführbar ist, dass in dem Körper (6) eine Kammer (14) vorhanden ist, die in die Aufnahmetasche (13) mündet, dass in der Kammer (14) eine zweite Zustelleinrichtung (12) beweglich gelagert ist, an deren einen freien der Aufnahmetasche (13) zugewandten Stirnseite (16) die Stecker (4) angeordnet sind, und dass durch die Zustellbewegung der zweiten Zustelleinrichtung (12) die Stecker (4) in Wirkkontakt mit jeweils einer der Aufnahmeöffnungen (3) der Steckdose (2) zur elektrischen Energieübertragung und zur Erzeugung des Kopplungszustandes gelangen und durch die zweite Zustelleinrichtung (12) die Stecker (4) nach Beendigung der Energieübertragung aus der jeweiligen Aufnahmeöffnung (3) der Steckdose (2) zur Entkopplung herausgezogen sind.

2. Steck-Vorrichtung (1) nach Anspruch 1,
**dadurch gekennzeichnet,**
**dass** die Bewegungen der ersten und zweiten Zustelleinrichtung (11, 12) derart zueinander synchronisiert sind, dass zur Erzeugung des Kopplungszustandes zwischen den Aufnahmeöffnungen (3) und den Steckern (4) zunächst die Steckdose (2) in den Körper (6) durch die erste Zustelleinrichtung (11) positioniert und anschließend die Stecker (4) mittels der zweiten Zustelleinrichtung (12) in Richtung der Steckdose (2) verschoben sind.

3. Steck-Vorrichtung (1) nach Anspruch 1 oder 2,
**dadurch gekennzeichnet,**
**dass** die Aufnahmetasche (13) und die Kammer (14) senkrecht zueinander in dem Körper (6) verlaufen.

4. Steck-Vorrichtung (1) nach einem der vorgenannten Ansprüche,
**dadurch gekennzeichnet,**
**dass** die erste Zustelleinrichtung (11) in einem Gehäuse (10) angeordnet ist, dass in dem Gehäuse (10) beabstandet zu der ersten Zustelleinrichtung (11) eine dritte Zustelleinrichtung (23) vorgesehen ist, die parallel zu der ersten Zustelleinrichtung (11) verläuft und die in einer trieblichen Wirkverbindung mit der zweiten Zustelleinrichtung (12) zu deren Bewegungsaktivierung steht.

5. Steck-Vorrichtung (1) nach Anspruch 4,
**dadurch gekennzeichnet,**
**dass** die erste und dritte Zustelleinrichtung (11, 23) als pneumatisch oder hydraulisch betriebene Kolben oder teleskopartig ineinander verschiebbare Rohre und die zweite Zustelleinrichtung (12) als Stange oder Stift ausgestaltet sind und dass die erste und dritte Zustelleinrichtung (11, 23) durch eine Steuereinheit (16) aktivierbar und überwachbar sind.

6. Steck-Vorrichtung (1) nach Anspruch 4 oder 5,
**dadurch gekennzeichnet,**
**dass** die zweite und dritte Zustelleinrichtung (12, 23) unmittelbar aneinanderliegen und eine Schnittstelle bilden, oder dass zwischen der zweiten und dritten Zuselleinrichtung (12, 23) eine Richtungshülse 37 angeordnet ist, die mit der zweiten und dritten Zustelleinrichtung (12, 23) in einer trieblichen Wirkverbindung steht und eine Schnittstelle bildet.

7. Steck-Vorrichtung (1) nach Anspruch 6,
**dadurch gekennzeichnet,**
**dass** an der Schnittstelle zwischen der zweiten und dritten Zustelleinrichtung (12, 23) jeweils eine schiefe Ebene (29, 30)vorgesehen ist, die parallel zueinander oder zwischen der Dichtungshülse (37) und der zweiten Zustelleinrichtung (12) verlaufen und die in Richtung der Zustellbewegung der zweiten Zustelleinrichtung (12) derart geneigt sind, dass durch die Bewegung der dritten Zustelleinrichtung (23) die axiale Zustellbewegung der zweiten Zustelleinrichtung (12) in Richtung der Aufnahmetasche (13) unmittelbar oder über die Dichtungshülse (37) erfolgt.

8. Steck-Vorrichtung (1) nach einem der vorgenannten Ansprüche,
**dadurch gekennzeichnet,**
**dass** die Aufnahmetasche (13) mittels eines Dichtungsdeckels (21) luft- und/oder wasserdicht verschließbar ist und dass durch die Zustellbewegung der ersten Zustelleinrichtung (11) der Dichtungsdeckel (21) in die Aufnahmetasche (13) bewegbar ist, derart, dass die in die Aufnahmetasche (13) einmündende Kammer (14) freigegeben ist.

9. Steck-Vorrichtung (1) nach Anspruch 8,
**dadurch gekennzeichnet,**
**dass** zwischen dem Dichtungsdeckel (21) und dem Boden (28) der Aufnahmetasche (13) eine Schraubendruckfeder (26) vorgesehen ist, durch die der Dichtungsdeckel (21) in Richtung der Öffnung (29) der Aufnahmetasche (13) bewegbar ist.

10. Steck-Vorrichtung (1) nach Anspruch 9,
**dadurch gekennzeichnet,**
**dass** der Dichtungsdeckel (21) im Querschnitt U-förmig ausgestaltet ist, dass die offene Stirnseite des U-förmigen Dichtungsdeckels (21) in Richtung des Bodens (28) der Aufnahmetasche (13) weist und dass die Schraubendruckfeder (25) bereichsweise in das Querschnittsprofil des Dichtungsdeckels (21) eintaucht.

11. Steck-Vorrichtung (1) nach einem der Ansprüche 9 oder 10,
**dadurch gekennzeichnet,**
**dass** der Dichtungsdeckel (21) als Abstandshalter zwischen dem Boden (28) der Aufnahmetasche (13) und der Kammer (14) verwendet ist und dass die Bewegung der ersten Zustelleinrichtung (11) durch den Dichtungsdeckel (21) begrenzt ist.

12. Steck-Vorrichtung (1) nach einem der vorgenannten Ansprüche,
**dadurch gekennzeichnet,**
**dass** in dem Gehäuse (10) eine oder mehrere Gebläseöffnungen (22) eingearbeitet ist bzw. sind, durch die ein Luft- und/oder Flüssigkeitsstrom in Richtung der Öffnungen (18, 19, 22) der Aufnahmetasche (13) bzw. der Kammer (14) erzeugbar ist.

13. Steck-Vorrichtung (1) nach einem der vorgenannten Ansprüche,
**dadurch gekennzeichnet,**
**dass** der ersten und/oder dritten Zustelleinrichtung (11 bzw. 23) ein Näherungsschalter (27) zugeordnet ist, durch den der Abstand zwischen der ersten bzw. dritten Zustelleinrichtung (11 bzw. 23) und dem Körper (6) feststellbar ist, und dass die jeweiligen Näherungsschalter (27) mit der Steuereinheit (16) elektrisch verbunden ist.

14. Steck-Vorrichtung (1) nach einem der vorgenannten Ansprüche 3 bis 13,
**dadurch gekennzeichnet,**
**dass** der Körper (6) zur Erzeugung des Kopplungszustandes derart zudem Gehäuse (10) positioniert ist, dass die Aufnahmetasche (13) fluchtend zu der ersten Zustelleinrichtung (11) und die dritte Zustelleinrichtung (23) fluchtend zu dem freien Ende der zweiten Zustelleinrichtung (12) angeordnet sind.

15. Steck-Vorrichtung (1) nach einem der vorgenannten Ansprüche 7 bis 14,
**dadurch gekennzeichnet,**
**dass** die zweite Zustelleinrichtung (12) mittels einer Schraubendruckfeder (26) zusammenwirkt, die zwischen der Aufnahmetasche (13) und dem dieser gegenüberliegenden freien Ende der zweiten Zustelleinrichtung (12) angeordnet ist und dass die Durchgangsöffnung (18) mittels der Dichtungshülse (37) luft- und/oder wasserdicht verschließbar ist.

## Claims

1. An electrical plug device (1) for transferring electrical energy from an external source of current (8) to an electrical load (7) arranged in a body (6), preferably in a chuck body (6) of a chuck (9), in particular an electrical drive motor (7) for actuating the clamping jaws of the chuck (9),
consisting of:
- a socket (2) possessing at least two accommodation openings (3), a body (6) and an electrical load (7) arranged therein, each of which is connected to the source of current (8) via an electrical cable (5) and
- of at least two plugs (4) connected to the load (7) by one electrical cable (5) each, with the plugs (4) arranged in the body (6) and coupled to the particular accommodation openings (3) of the socket (2) during the electrical energy transfer, and in which the plugs (4) can be removed from the accommodation openings (3) following the energy transfer,
**characterised in that**,
the socket (2) can be moved in the direction of the body (6) by means of a first advance device (11), that the body (6) has a holding pocket (13) worked into it or provided in it, into which the first advance device (11) can be inserted with the socket (12), that the body (6) has a chamber (14) which opens into the holding pocket (13), that the chamber (14) has a second advance device (12) mounted on it in a moving arrangement on which the plugs (4) are arranged on a free face end (16) of the second advance device (12) facing towards the holding pocket (13), and that the advance movement of the second advance device (12) brings the plugs (4) into active contact with one each of the accommodation openings (3) of the socket (2) for electrical energy transfer and for generating the coupling status, and by means of which the second advance device (12) pulls the plugs (4) out of the particular accommodation opening (3) of the socket (2) for decoupling at the end of the energy transfer.

2. The plug device (1) in accordance with Claim 1,
**characterised in that**,
the movements of the first and second advance devices (11, 12) are synchronised in relation to one another in such a way that to create the coupling status between the accommodation openings (3) and the plugs (4), the socket (2) is first positioned in the body (6) by the first advance device (11), and then the plugs (4) are pushed by the second advance device (12) in the direction of the socket (2).

3. The plug device (1) in accordance with Claim 1 or 2,
**characterised in that**,
the holding pocket (13) and the chamber (14) run at right angles to one another in the body (6).

4. The plug device (1) in accordance with one of the aforementioned claims,
**characterised in that**,
the first advance device (11) is arranged in a housing (10), that a third advance device (23) is provided in the housing (10) at a distance from the first advance device (11), with the third advance device (23) running parallel to the first advance device (11) and in a driving, active connection with the second advance device (12) in order to activate it for movement.

5. The plug device (1) in accordance with Claim 4,
**characterised in that**,
the first and third advance devices (11, 23) are configured as pneumatically or hydraulically operated pistons or tubes that can be pushed one inside the other in a telescopic arrangement, that the second advance device (12) is configured as a rod or pin, and that the first and third advance devices (11, 23) can be activated and monitored by a control unit (16).

6. The plug device (1) in accordance with Claim 4 or 5,
**characterised in that**,
the second and third advance devices (12, 23) are in direct contact with one another and form an interface, or that a sealing sleeve (37) is arranged between the second and third advance devices (12, 23) which is in a driving, active connection with the second and third advance devices (12, 23) and forms an interface.

7. The plug device (1) in accordance with Claim 6,
**characterised in that**,
that a slanted plane (29, 30) are provided in each case at the interface between the second and third advance devices (12, 23), that the slanted planes (29, 30) run parallel to one another or run between the sealing sleeve (37) and the second advance device (12) and are arranged in the direction of the advance movement of the second advance device (12) in such a way that the movement of the third advance device (23) causes the axial advance movement of the second advance device (12) in the direction of the holding pocket (13) directly or via the sealing sleeve (37).

8. The plug device (1) in accordance with one of the aforementioned claims,
**characterised in that**,
the holding pocket (13) can be provided with an air and/or water-tight seal by means of a sealing cover (21) and that the advance movement of the first advance device (11) enables the sealing cover (21) to be moved into the holding pocket (13) in such a way that the chamber (14) opening into the holding pocket (13) is released.

9. The plug device (1) in accordance with Claim 8,
**characterised in that**,
a coil compression spring (26) is provided between the sealing cover (21) and the base (28) of the holding pocket (13), by means of which the sealing cover (21) can be moved in the direction of the opening (29) of the holding pocket (13).

10. The plug device (1) in accordance with Claim 9,
**characterised in that**,
the sealing cover (21) has a U-shaped cross-section, that the open face end of the U-shaped sealing cover (21) points towards the base (28) of the holding pocket (13), and that the coil compression spring (25) engages with the cross-sectional profile of the sealing cover (21) in some areas.

11. The plug device (1) in accordance with one of Claims 9 or 10,
**characterised in that**,
the sealing cover (21) is used as a spacer between the base (28) of the holding pocket (13) and the chamber (14), and that the movement of the first advance device (11) is limited by the sealing cover (21).

12. The plug device (1) in accordance with one of the aforementioned claims,
**characterised in that**,
the housing (10) has one or more blower openings (22) worked into it, through which an air and/or liquid flow can be generated in the direction of the openings (18, 19, 22) of the holding pocket (13) or of the chamber (14).

13. The plug device (1) in accordance with one of the aforementioned claims,
**characterised in that,**
the first and/or third advance device (11 or 23) has/have a proximity switch (27) arranged for it/them, by means of which the distance between the first or third advance device (11 or 23) and the body (6) can be determined, and that the particular proximity switch (27) is electrically connected to the control unit (16).

14. The plug device (1) in accordance with one of the aforementioned Claims 3 to 13,
**characterised in that**,
the body (6) for generating the coupling condition is positioned in such a way in relation to the housing (10) that the holding pocket (13) is arranged flush with the first advance device (11) and the third advance device (23) is arranged flush with the free end of the second advance device (12).

15. The plug device (1) in accordance with one of the aforementioned Claims 7 to 14,
**characterised in that**,
the second advance device (12) interacts with a coil compression spring (26) arranged between the holding pocket (13) and the free end of the second advance device (12) that is opposite to the holding pocket (13), and that the passage opening (18) can be sealed with an air and/or water-tight seal by means of the sealing sleeve (37).

## Revendications

1. Dispositif d'emboîtement électrique (1) servant à la transmission d'énergie électrique à partir d'une source de courant externe (8) à un consommateur (7), en particulier un moteur d'actionnement (7) disposé dans un corps (6), de préférence un corps de mandrin (6) d'un mors de serrage (9), et actionnant les mors de serrage du mandrin de serrage (9),
comprenant :
- une prise (2) avec au moins deux ouvertures de réception (3), un corps (6) et un consommateur électrique (7) disposé dans celui-ci, qui sont raccordés respectivement par une ligne électrique (5) à la source de courant (8), et
- au moins deux connecteurs (4) raccordés respectivement par une ligne électrique (5) au consommateur (7) et disposés dans le corps (6) qui, durant la transmission de l'énergie électrique, sont couplés aux ouvertures de réception respectives (3) de la prise (2) et qui, suite à la transmission d'énergie, se laissent séparer des ouvertures de réception (3),
**caractérisé en ce que**
moyennant un premier équipement d'avance (11), la prise (2) se laisser déplacer en direction du corps (6), que dans le corps (6), il est pratiqué ou prévu une poche de réception (13) dans laquelle il est possible d'insérer le premier équipement d'avance (11) avec la prise (2), que dans le corps (6), il est prévu une chambre (14) qui aboutit dans la poche de réception (13), que dans la chambre (14), il est logé de manière mobile un deuxième équipement d'avance (12) sur la face frontale libre (16) duquel, donnant sur la poche de réception (13), il est arrangé les connecteurs (4), et que par le mouvement d'avance du deuxième équipement d'avance (12), les connecteurs (4) entrent en contact actif avec respectivement une des ouvertures de réception respectives (3) de la prise (2) afin de réaliser la transmission d'énergie électrique et l'état accouplé et que par le deuxième équipement d'avance (12), les connecteurs (4) sont retirés de l'ouverture de réception respective (3) de la prise (2) pour le découplage suite à la transmission d'énergie.

2. Dispositif d'emboîtement (1) d'après la revendication 1,
**caractérisé en ce que**
les mouvements du premier et du deuxième équipement d'avance (11, 12) sont synchronisés de sorte que pour réaliser l'état accouplé entre les ouvertures de réception (3) et les connecteurs (4), la prise (2) est d'abord positionnée par le premier équipement d'avance (11) dans le corps (6), tandis qu'ensuite les connecteurs (4) sont déplacés en direction de la prise (2) par le deuxième équipement d'avance (12).

3. Dispositif d'emboîtement (1) d'après les revendications 1 ou 2,
**caractérisé en ce que**
la poche de réception (13) et la chambre (14) sont orientées perpendiculairement dans le corps (6).

4. Dispositif d'emboîtement (1) d'après une des revendications précédentes,
**caractérisé en ce que**
le premier équipement d'avance (11) est disposé dans un boîtier (10), que dans le boîtier (10), il est prévu un troisième équipement d'avance (23) qui est espacé du premier équipement d'avance (11) et orienté parallèle à ce dernier puis raccordé par entraînement avec le deuxième équipement d'avance (12) afin d'actionner son mouvement.

5. Dispositif d'emboîtement (1) d'après la revendication 4,
**caractérisé en ce que**
le premier et le troisième équipement d'avance (11, 23) sont conçus en tant que pistons à actionnement pneumatique ou hydraulique ou en tant que tubes télescopiques s'emboîtant l'un dans l'autre, que le deuxième équipement d'avance (12) est conçu en tant que tige ou de goujon, et que le premier et le troisième équipement d'avance (11, 23) sont actionnés et surveillés par une unité de commande (16).

6. Dispositif d'emboîtement (1) d'après les revendications 4 ou 5,
**caractérisé en ce que**
le deuxième et le troisième équipement d'avance (12, 23) s'avoisinent directement et forment une interface ou qu'entre le deuxième et le troisième équipement d'avance (12, 23), il est monté une douille d'étoupage (37) raccordée par entraînement au deuxième et au troisième équipement d'avance (12, 23) et formant une interface.

7. Dispositif d'emboîtement (1) d'après la revendication 6,
**caractérisé en ce que**,
au niveau de l'interface entre le deuxième et le troisième équipement d'avance (12, 23), il est prévu respectivement un plan incliné (29, 30) parallèle l'un à l'autre ou s'étendant entre la douille d'étoupage (37) et le deuxième équipement d'avance (12), et qui est incliné en direction du mouvement d'avance du deuxième équipement d'avance (12) de sorte que grâce au mouvement du troisième équipement d'avance (23), il y a lieu le mouvement d'avance axial du deuxième équipement d'avance (12) en direction de la poche de réception (13), soit directement soit par l'intermédiaire de la douille d'étoupage (37).

8. Dispositif d'emboîtement (1) d'après une des revendications précédentes,
**caractérisé en ce que**,
à l'aide d'un couvercle (21), la poche de réception (13) se laisse obturer de manière étanche à l'air et/ou à l'eau et que grâce au mouvement d'avance du premier équipement d'avance (11), le couvercle (21) se laisse déplacer dans la poche de réception (13) de sorte que la chambre (14) aboutissant dans la poche de réception (13) est libérée.

9. Dispositif d'emboîtement (1) d'après la revendication 8,
**caractérisé en ce que**
entre le couvercle (21) et le fond (28) de la poche de réception (13), il est prévu un ressort hélicoïdal de pression (25) qui permet de déplacer le couvercle (21) en direction de l'ouverture (29) de la poche de réception (13).

10. Dispositif d'emboîtement (1) d'après la revendication 9,
**caractérisé en ce que**
le couvercle (21) a une coupe transversale en U, que la face frontale ouverte du couvercle en U (21) donne sur le fond (28) de la poche de réception (13) et que le ressort hélicoïdal de pression (25) entre partiellement dans la coupe transversale du couvercle (21).

11. Dispositif d'emboîtement (1) d'après une des revendications 9 ou 10,
**caractérisé en ce que**
le couvercle (21) sert de pièce d'écartement entre le fond (28) de la poche de réception (13) et la chambre (14) et que le mouvement du premier équipement d'avance (11) est limité par le couvercle (21).

12. Dispositif d'emboîtement (1) d'après une des revendications précédentes,
**caractérisé en ce que**
dans le boîtier (10), il est pratiqué une ou plusieurs ouvertures de soufflage (22) permettant de créer un flux d'air et/ou de liquide en direction des ouvertures (18, 19, 22) de la poche de réception (13) ou de la chambre (14).

13. Dispositif d'emboîtement (1) d'après une des revendications précédentes,
**caractérisé en ce que**,
au premier et/ou au troisième équipement d'avance (11 ou 23), il est assigné un contacteur de proximité (27) qui permet de déterminer la distance entre le premier ou le troisième équipement d'avance (11 ou 23) et le corps (6) et que les contacteurs de proximité respectifs (27) sont raccordés électriquement à l'unité de commande (16).

14. Dispositif d'emboîtement (1) d'après une des revendications précédentes 3 à 13,
**caractérisé en ce que**
pour réaliser le couplage, le corps (6) est positionné relativement au boîtier (10) de sorte que la poche de réception (13) soit en alignement précis avec le premier équipement d'avance (11) et le troisième équipement d'avance (23) en alignement précis avec l'extrémité libre du deuxième équipement d'avance (12).

15. Dispositif d'emboîtement (1) d'après une des revendications précédentes 7 à 14,
**caractérisé en ce que**
le deuxième équipement d'avance (12) collabore avec un ressort hélicoïdal de pression (25) qui est prévu entre la poche de réception (13) et l'extrémité libre du deuxième équipement d'avance (12) qui lui est opposée, et qu'à l'aide de la douille d'étoupage (37), l'ouverture de passage (18) se laisse obturer de manière étanche à l'air et/ou à l'eau.
